Europäisches Patentamt

(19) European Patent Office

Office européen des brevets

(11) Numéro de publication: **0 079 277**
**A2**

(12) **DEMANDE DE BREVET EUROPEEN**

(21) Numéro de dépôt: **82402027.5**

(22) Date de dépôt: **04.11.82**

(51) Int. Cl.³: **B 60 P 3/06**

(30) Priorité: **09.11.81 FR 8121338**

(43) Date de publication de la demande:
**18.05.83 Bulletin 83/20**

(84) Etats contractants désignés:
**AT BE CH DE GB IT LI LU NL SE**

(71) Demandeur: **TRANSIT-TRANSCITERNE S.A.R.L. dite:**
**2, Quai de la République**
**F-34200 Sete(FR)**

(72) Inventeur: **Adams, Albert**
**2, Quai de la République**
**F-34200 Sete(FR)**

(74) Mandataire: **Ecal, François**
**4, rue Fabrégat**
**F-34500 Béziers(FR)**

(54) **Dispositif pour le transport routier des wagons ferroviaires.**

(57) Pour le transport à domicile de wagons ferroviaires, l'installation selon la présente invention comporte un chariot (1) à deux essieux routiers fixes, un dispositif d'accouplement du wagon ferroviaire à un tracteur routier et une rampe de voie ferroviaire (34).

Le chariot (1) comprend un support de roues ferroviaires constitué par deux longerons latéraux (5) faisant fonction de rails, chacun des deux longerons présentant dans sa partie médiane un évidement (6) destiné à être en contact avec une portion de la roue ferroviaire (7).

Le dispositif d'accouplement du wagon ferroviaire est constitué par un deuxième chariot qui comporte un support des roues ferroviaires (11) monté de manière pivotante par rapport aux essieux routiers et, à sa partie antérieure, un organe d'attelage (13) à un tracteur routier (26). La rampe (34) permet un chargement rapide du wagon ferroviaire (43) sur les chariots (16 et 18).

EP 0 079 277 A2

./...

Fig. 4

# DISPOSITIF POUR LE TRANSPORT ROUTIER DE WAGONS FERROVIAIRES.

La présente invention a pour objet un dispositif permettant le transport routier de wagons ferroviaires.

Depuis longtemps toutes les entreprises de chemins de fer s'efforcent de prendre en charge et de livrer à domicile par wagons complets chez les usagers qui ne possèdent pas d'embranchement ferroviaire particulier .

A cet effet plusieurs solutions ont été proposées . C'est ainsi qu'il a été prévu , en vue du transport routier des wagons ferroviaires , d'échanger les organes de roulement ferroviaire par des organes de roulement routiers . Outre qu'un tel procédé n'est applicable pratiquement qu'aux wagons munis de boggies , il nécessite une installation très onéreuse et longue à mettre en œuvre pour permettre une telle substitution, qui impose d'ailleurs obligatoirement le retour des wagons ainsi modifiés à la gare où cette substitution a été effectuée .

Il existe aussi des chassis routiers surbaissés , sous forme de camions ou de semi-remorques , qui sont capables de porter un wagon ferroviaire . Mais l'empattement des wagons étant différent selon leur type , et de ce fait la position du centre de gravité ainsi que le point d'appui des wagons sur la plateforme routière étant très variables , il est nécessaire de prévoir des chassis routiers capables de résister quelle que soit la position sur eux-mêmes de ces points de contrainte , ce qui nécessite des chassis très lourds , dont le poids mort réduit d'autant la charge utile, pour être compatibles malgrè leur poids mort avec la puissance motrice mise en œuvre ainsi qu'avec la législation routière .

L'objet de la présente invention a donc pour but d'éviter ces inconvénients en supprimant la nécessité de substituer un train routier au train de roues ferroviaires , et en organisant un dispositif qui prend en charge le wagon sans que celui-ci doive obligatoirement être modifié , ledit dispositif étant adaptable à tous les empattements de wagons de façon simple et au moyen d'éléments légers .

Pour cela le dispositif objet de la présente invention comporte au moins un chariot muni de deux essieux routiers et portant un tronçon de voie ferroviaire destiné à supporter un train de roulement de wagon qui n'a subi en lui-même aucune modification et qui vient se placer sur ledit chariot routier sensiblement à distance égale de ses deux essieux . Le wagon ainsi porté est amené sur le chariot au moyen d'une rampe fixe de voie ferroviaire à l'extrémité de laquelle ledit chariot est amené et accouplé .

Pour obtenir l'ensemble de ces résultats , et selon un mode de réalisation de l'objet de la présente invention , le tronçon de voie ferroviaire que ledit chariot porte , au niveau de ses longerons longitudinaux latéraux , présente un évidement en forme de berceau circulaire qui permet de situer et de caler les roues ferroviaires sur ledit chariot à distance égale de ses essieux routiers .

Un tel dispositif peut ainsi être prévu pour porter chacun des essieux d'un wagon indépendamment l'un de l'autre , chacun d'eux étant porté par un chariot indépendant , ce qui permet de disposer d'un ensemble porteur résistant , quoique très léger, puisque aucun chassis ne relie les deux chariots entre eux, en même temps qu'un tel dispositif est immédiatement adaptable à tous les empattements des wagons, les chariots porteurs de chacun des essieux avant et arrière du wagon n'étant pas liés ensemble de façon rigide et immuable .

L'un des deux chariots ainsi constitués comporte un dispositif d'attelage à un camion pour constituer le train avant de la remorque routière ainsi réalisée , le tronçon de voie ferroviaire porté par ledit chariot et qui présente les berceaux qui retiennent les roues des wagons n'étant pas, dans ce cas , monté directement sur les longerons qui forment le chassis du chariot, mais sur une plateforme qui peut pivoter sur ledit chassis .

Quant au chariot qui constitue le train arrière de ladite remorque routière formée par le wagon ainsi porté , il comporte une pièce mobile destinée à permettre de combler le berceau que présente le tronçon de voie ferroviaire dont est muni ledit chariot arrière, de façon à permettre le roulement du train avant du wagon sur ledit chariot arrière avant qu'il ait atteint le chariot avant qui doit le porter , ladite pièce mobile pouvant être escamotée après le passage du train avant du wagon pour ouvrir le berceau dudit chariot arrière dans lequel viendra se loger à son tour le train arrière du wagon .

Les dessins annexés, donnés à titre d'exemple seulement , montrent un mode de réalisation de chacun des éléments de l'objet de la présente invention , selon les modes de réalisation décrits .

Les figures 1 ( a et b ) sont les vues schématiques, en élévation de profil coupé selon le plan médian AB , et en plan d'un chariot objet de l'invention destiné à porter un train arrière de wagon ferroviaire .

Les figures 2 ( a et b ) sont les vues schématiques en élévation de profil coupé selon le plan médian CD et en plan d'un chariot objet de l'invention destiné à porter un train avant de wagon ferroviaire.

La figure 3 est une vue schématique en plan montrant un moyen de liaison entre les deux chariots d'un même attelage .

Les figures 4 ( a, b et c ) sont des vues schématiques en élévation de profil montrant les différentes phases d'une opération de chargement d'un wagon sur les chariots .

La figure 5 ( a ) est une vue schématique partielle , en élévation, de profil de la partie somitale de la rampe de chargement des wagons sur les chariots routiers.

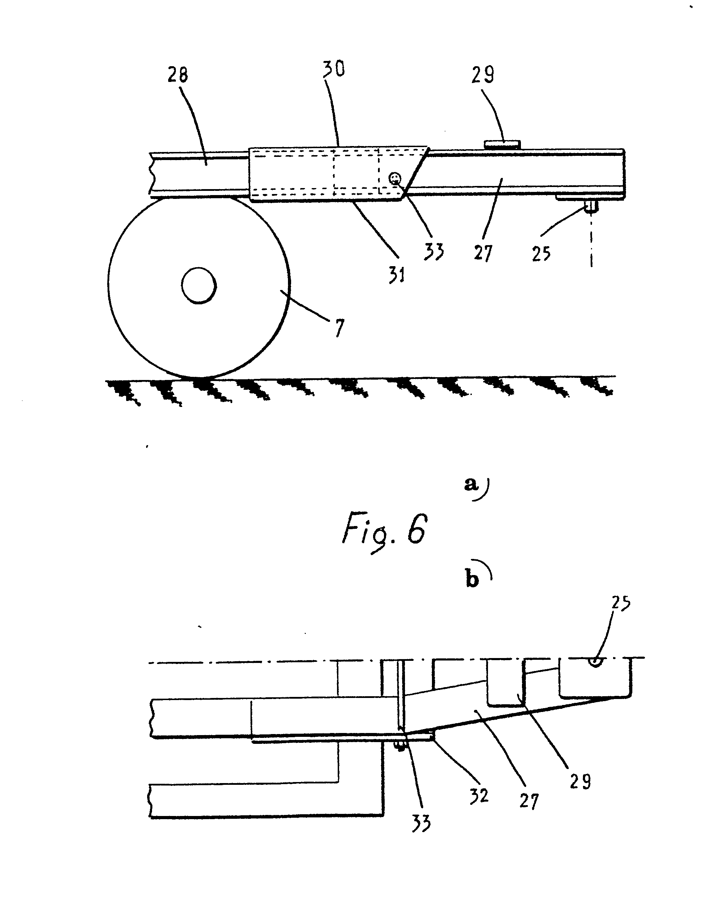

La figure 5 ( b ) est une vue schématique partielle, en coupe verticale selon EF de cette même partie de la rampe .

Les figures 6 ( a et b ) sont des vues schématiques partielles en élévation de profil et en plan des moyens d'attelage d'un chariot à un tracteur de semi-remorque .

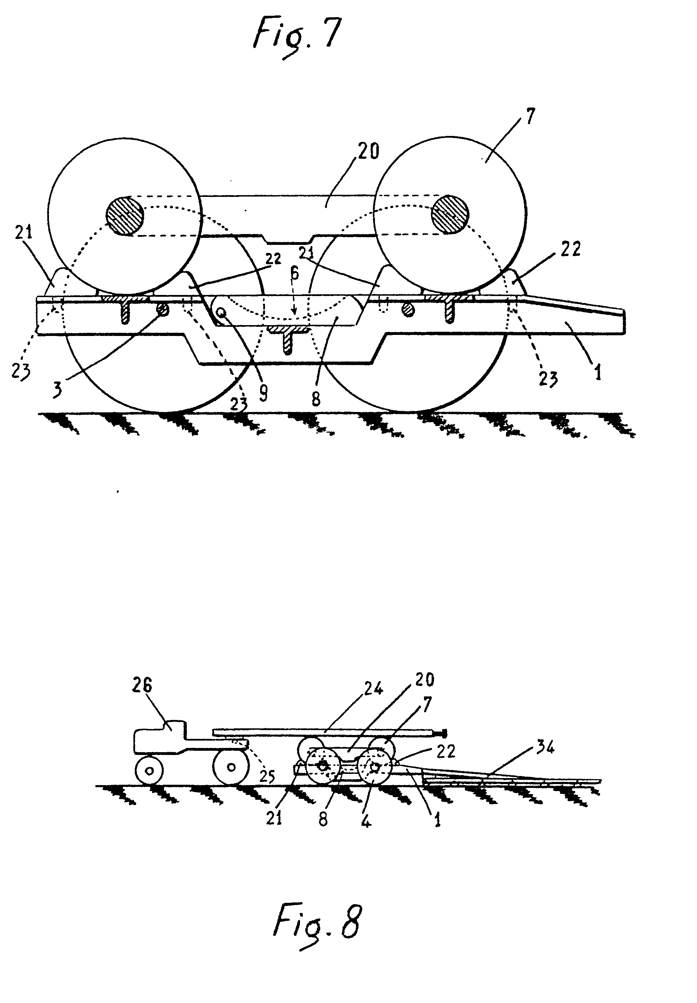

.La figure 7 est une vue schématique en élévation de profil montrant l'adaptation d'un tel chariot au transport d'un wagon à boggies .

La figure 8 est une vue schématique en élévation de profil d'un camion attelé à un chariot à la manière d'une semi-remorque.

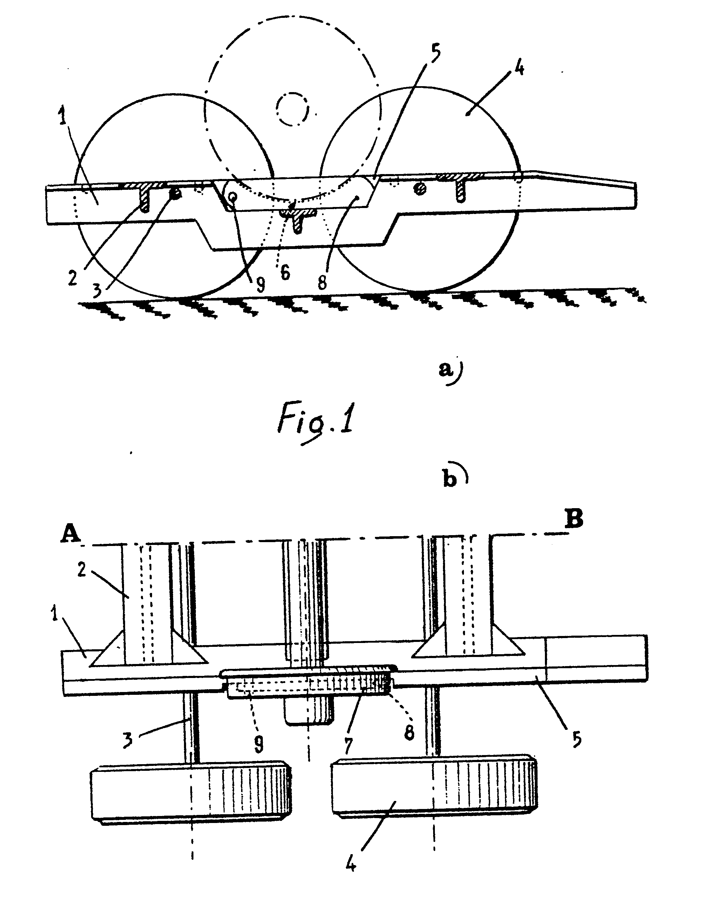

Tel qu'il est représenté ( figure 1 a et 1 b ) le chariot destiné à recevoir le train de roulement arrière d'un wagon ferroviaire est essentiellement constitué par le chassis formé par les longerons 1 et les poutres transversales 2 , ledit chassis portant les essieux 3 des roues routières 4 .

Chacun des longerons 1 porte une pièce métallique 5 , qui joue le rôle de rail , et qui présente à égale distance des essieux 3 le berceau circulaire 6 dont le rayon est tel qu'une roue du wagon 7 ( fig.1 b ) s'y trouvera convenablement calée .

En outre ledit chariot arrière comporte la pièce mobile 8 qui peut basculer autour de l'axe 9 . Ladite pièce mobile 8 est capable , lorsque son extrémité libre porte horizontalement sur le chassis 1 , de permettre à une roue de wagon de rouler librement au-dessus du berceau 6 sans s'y loger dedans . Inversement lorsque cette pièce 8 est remontée et qu'elle pose sur l'essieu 3 qui en l'occurence joue le rôle de butée, le berceau 6 se trouve dégagé permettant ainsi à une roue de wagon d'y pénétrer et de s'y caler .

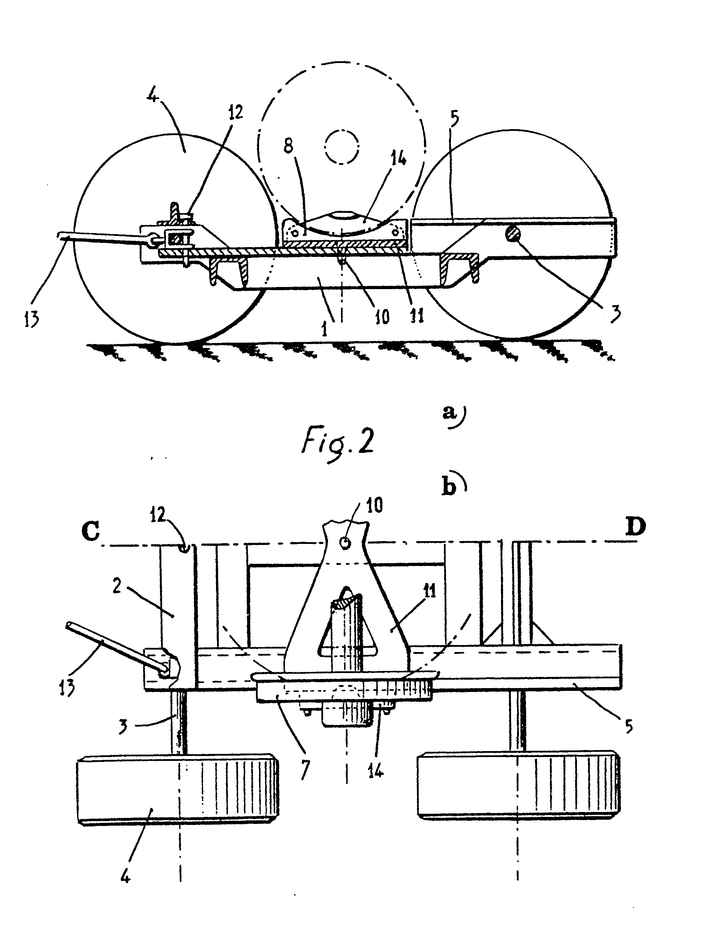

Selon les figures 2 ( a et b ) le chariot destiné à recevoir le train avant d'un wagon comporte aussi le chassis monté sur les roues routières 4 et constitué par les longerons 1 et les traverses 2 , mais le berceau circulaire 6 , capable de recevoir la roue de chemin de fer 7 , est mobile dans le plan horizontal par rapport au chassis 1 , en rotation autour de l'axe vertical 10 situé dans le plan médian C D du chariot, les berceaux 6 dudit chariot étant situés aux extrémités du plateau mobile 11 et étant chacun dans l'alignement exact des tronçons de rail 5 qui conduisent les roues 7 du wagon vers lesdits berceaux 6 . Cette mobilité du plateau qui porte les berceaux 6 par rapport au chassis 1 permet la manœuvre du chariot avant , qui joue le rôle de chariot directeur .

Afin de faciliter encore cette manœuvre, l'essieu avant 3 peut être rendu mobile par rapport au même chassis 1 , étant capable de pivoter dans le plan horizontal autour du pivot 12 . L'attelage au camion de remorquage s'effectue au moyen du brancard triangulaire 13 articulé sur des pièces solidaires de l'essieu 3 ou de son support.

Par ailleurs, afin d'immobiliser les roues du wagon dans leur berceau 6 , sur chacun des chariots correspondants, la pièce 14 est fixée , après mise en place du wagon , sur le flanc des berceaux 6 , ladite pièce possédant un bord rabattu supérieur qui, venant s'engager dans la jante de la roue ferroviaire 7 , assure son immobilisation par rapport au berceau 6 .

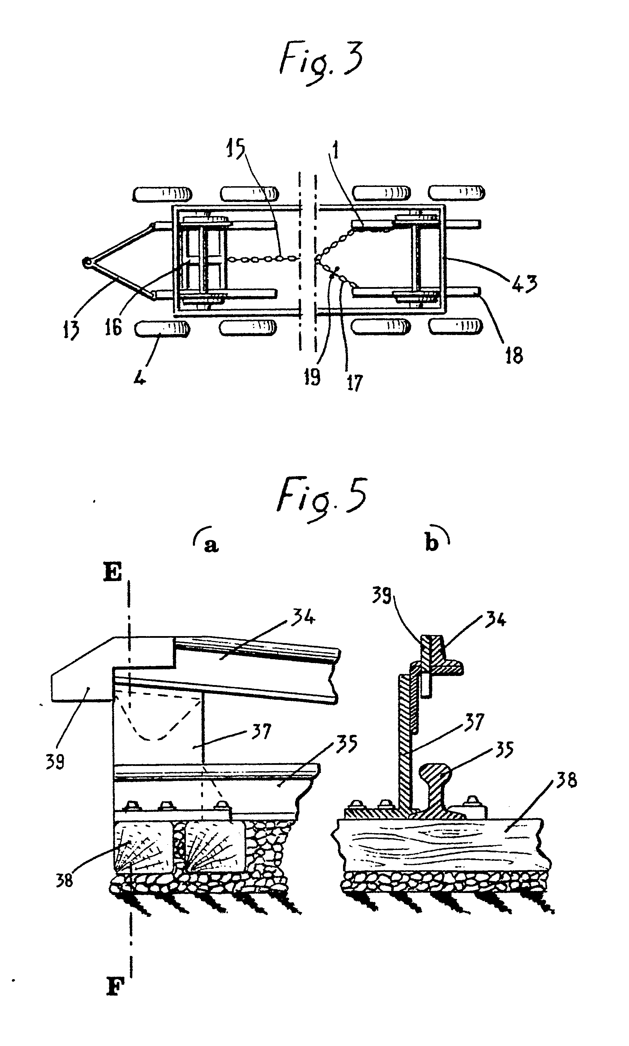

Afin que la transmission de l'effort de traction au chariot arrière ne se fasse pas par l'intermédiaire du chassis du wagon qui est porté par lesdits chariots, ceux-ci sont reliés entre eux de façon ajustable et non extensible . Ce moyen peut être par exemple un faux chassis formé d'une unique poutre médiane télescopique, ou de deux poutres latérales télescopiques , qui permettent l'ajustage en longueur de l'empattement des deux chariots en concordance avec l'empattement du wagon qu'ils portent, les éléments télescopiques étant bloqués en position adéquate . Ce moyen peut être aussi ( selon la figure 3 ) une chaîne principale 15 fixée au chariot avant 16 et rendue solidaire en son milieu d'une chaîne 17 placée transversalement entre les deux longerons du chariot postérieur 18 . L'ajustage et la tension de ce mode de liaison des deux chariots s'effectue d'une part en ajustant la longueur de la chaîne transversale 17, en l'accrochant sur l'un des longerons du chariot 18 , puis en parachevant cet ajustement au moyen du tendeur à vis 19 intercalé dans ladite chaîne 17 .

Selon la figure 7, on remarque qu'un tel chariot convient aussi bien au transport routier des wagons à boggies qu'aux wagons à deux essieux . En effet on remarque que les roues 7 d'un boggie 20 se situent de part et d'autre des essieux 3 , qui peuvent être portés par des ressorts à lame non représentés , situés de part et d'autre du chassis 1 et articulés sur lui à la manière du fléau d'une balance , placé en équilibre en leur milieu , cette disposition permettant d'assurer un contact permanent des quatre roues avec le sol malgrè ses inégalités .

Dans ce cas le cache 8 du berceau 6 central, destiné au chargement des wagons à deux essieux , reste en position d'obturation dudit berceau , afin de permettre la libre circulation du boggie sur le chariot au cours de son chargement . Un dispositif identique de berceau supplémentaire muni de caches du même type peut être prévu pour assurer l'immobilisation de toutes les roues du boggie sur le chariot .

Mais le wagon peut aussi être immobilisé sur le chariot au moyen des sabots d'arrêt 21 situés à l'avant de chaque roue et des sabots d'arrêt 22 situés à l'arrière , placés chacun sous les roues du wagon qu'ils coîncent et immobilisés eux-mêmes en leur position de blocage par tout moyen convenable , tel que les tenons 23 . Une pièce 14 solidaire du chassis 1 , non représentée, est mise en place pour verrouiller chaque roue 7 sur le chassis en pénétrant dans chaque jante .

Selon la figure 8 , un tel dispositif se prête à recevoir un demi-wagon à boggies 24 , dont le demi-chassis est muni à sa partie avant d'une tourelle d'ancrage 25 permettant son attelage sur la plateforme d'un tracteur à semi-remorque 26 .

Ladite tourelle d'ancrage 25 est fixée à l'avant du chassis du demi-wagon 24 au moyen du timon 27 ( fig.6 a et 6 b ) formé par deux poutres prolongeant les longerons du chassis 28 dudit demi-wagon et convergeant vers la plateforme de la tourelle d'ancrage 25 , destinée à coopérer avec les moyens d'attelage prévus sur le tracteur semi-remorque 26 . Le timon ainsi formé est renforcé par l'entretoise 29 . Et il est installé sur le chassis 28 du demi-wagon , au moment de sa transformation en véhicule routier , par introduction par glissement dans les fourreaux solidaires du chassis 28 , de part et d'autre de celui-ci , et formé par les plaques 30 et 31  ( fig.6 a ) réunies extérieurement par la plaque 32 ( fig.6 b ) , le verrouillage en position étant obtenu par la clavette transversale 33 .

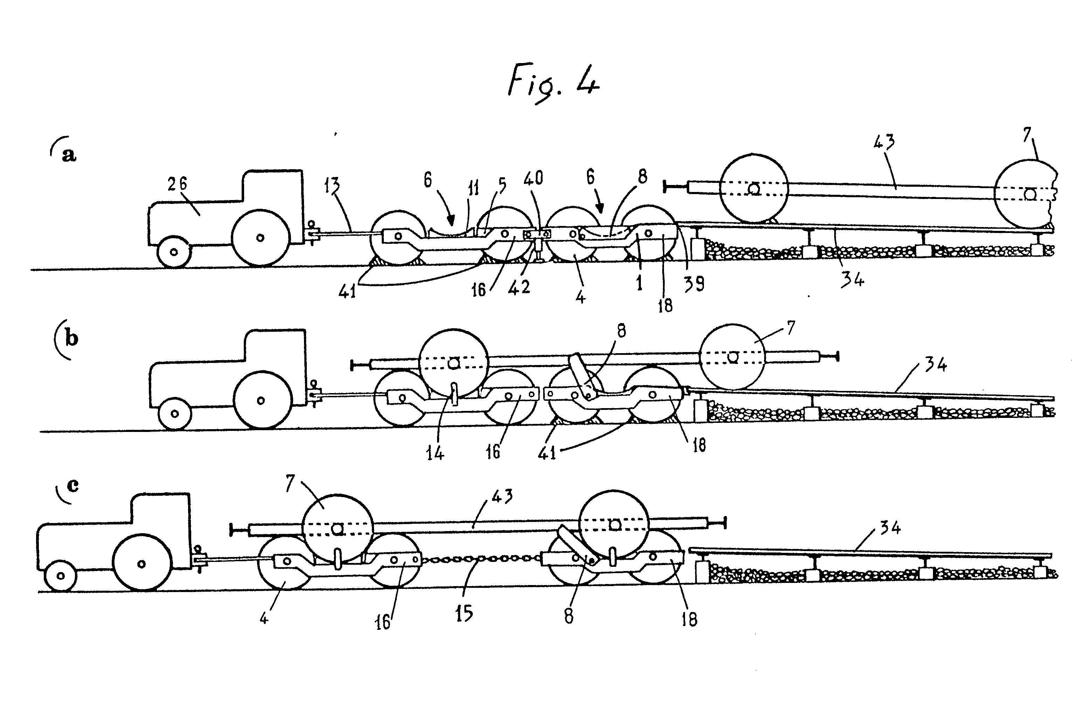

Dans chacun des cas ci-dessus décrits le chargement du wagon sur le chariot s'effectue au moyen d'une rampe 34  ( fig.4 et 8 ) formée d'un tronçon de voie ferroviaire inclinée au sommet de laquelle viennent s'ajuster exactement les tronçons de voie ferroviaire portés par le chariot considéré, ladite rampe 34 pouvant être fixe , située à l'extrémité d'une voie normale ( fig.4 ) , ou amovible, étant posée au besoin en tout point d'une voie normale 35 ( fig. 5 ) .

Selon cette dernière figure le tronçon de voie inclinée formant cette rampe est supporté par l'équerre 36 fixée au support vertical 37 solidaire des traverses 38 .  La contre-plaque 39 située à l'extrémité extérieure du rail 34 permet le guidage du chariot et l'ajustage de sa voie avec celle de la rampe , ladite plaque 39 enchâssant extérieurement le tronçon de voie 5 du chariot qui est amené à son niveau .

Le dispositif étant ainsi constitué on comprend que la manœuvre de chargement d'un wagon sur un train de chariot routier s'effectue de la façon suivante représentée par la figure 4 ( a, b et c). Les deux chariots, antérieur et postérieur, unis provisoirement entre eux au moyen des plaques 40 sont amenés au contact de la rampe 34 de manière à faire coïncider leur tronçon de voie avec celle-ci , grâce aux plaques 39 .  Les sabots d'arrêt 41 sont installés pour immobiliser les deux chariots .  Et la béquille réglable 42 est installée sous la plaque de jonction 40 afin d'éviter le basculement des chariots lors du roulement des wagons à ce niveau . Les masques 8 destinés à obturer le berceau du chariot postérieur sont abaissés  ( fig. 4 a ) .  Le wagon 43 peut ainsi librement rouler sur le tronçon de voie porté par le chariot postérieur jusqu'à ce que son train avant atteigne le berceau 6 du chassis antérieur . A cet instant les plaques de retenue 14 sont installées de part et d'autre du chariot antérieur pour immobiliser les roues du wagon dans son berceau 11 pivotant .

Les béquilles 42 sont alors enlevées ainsi que les plaques de jonction 40 et les sabots d'arrêt 41 du chariot avant . De même les masques 8 sont relevés de façon à ouvrir les berceaux du chariot postérieur de part et d'autre de celui-ci .

Le wagon étant ainsi rendu solidaire du chariot antérieur , celui-ci est entraîné par le tracteur 26 qui lui est attelé, entraînant par le fait même le wagon 43 dont l'arrière-train pénètrera ainsi sur le chariot postérieur maintenu immobilisé et viendra se loger dans son berceau , où il sera immobilisé par les pièces 14 .

Dans ce mouvement, les deux chariots se sont écartés automatiquement l'un de l'autre de la valeur de l'empattement du wagon , ce qui permet l'adaptation d'un tel dispositif à tout wagon quelle que soit sa longueur . Et l'élément de liaison extensible entre les deux chariots , tel que la chaîne 15 , peut alors être ajusté au moyen des éléments précédemment décrits à cet effet .

Le wagon ferroviaire 43 sera donc ainsi facilement et rapidement transformé en une remorque routière sans que son poids ait été considérablement augmenté.

Le chargement d'un wagon à boggie s'effectuerait selon une méthode identique .

Il est bien entendu que l'étendue de l'invention n'est pas limitée à l'exemple ou aux exemples de réalisation qui en ont été décrits, toute variante considérée comme équivalence ne pouvant en modifier la portée .

L'invention peut être utilisée pour la prise en charge ou la livraison à domicile des wagons ferroviaires chez les entreprises qui ne possèdent pas d'embranchement ferroviaire particulier.

REVENDICATIONS

1°) - Dispositif permettant le déplacement sur route d'un wagon ferroviairè,

Caractérisé par le fait qu'il comporte au moins un chariot muni de quatre roues routières ( 4 ) , ledit chariot étant capable de porter l'un des trains de roulement ( 7 ) , qui peut être un boggie , d'un wagon ferroviaire, de telle manière que les roues dudit train de roulement ( 7 ) soient immobilisées sur ledit chariot sensiblement à distances égales des deux essieux routiers ( 3 ) que ledit chariot comporte .

2°) - Dispositif selon la revendication 1,

Caractérisé par le fait que ledit chariot porte sur ses longerons latéraux ( 1 ) des pièces métalliques faisant fonction de rails ( 5 ) capables de supporter la charge totale correspondante d'un wagon ferroviaire et de conduire son train de roulement ( 7 ) , lesdites pièces métalliques ( 5 ) qui font fonction de rails , présentant dans leur partie médiane , et à égales distances des essieux routiers ( 3 ) un évidement ( 6 ) en forme de berceau circulaire pouvant recevoir chacune des roues ferroviaires ( 7 ) d'un même essieu de wagon et de l'y retenir , ledit évidement pouvant être masqué par une pièce métallique ( 8 ) mobile sur un chassis ( 1 ) autour de l'axe ( 9 ) , autour duquel ladite pièce est capable de basculer dans le plan vertical afin de venir masquer ledit berceau ( 6 ) pour permettre, quand cela est nécessaire , la libre circulation du wagon au niveau des berceaux ( 6 ) , le wagon ne se trouvant calé sur ledit chariot que tout autant que lesdites pièces ( 8 ) ayant été relevées les roues ( 7 ) du wagon se calent naturellement dans les berceaux ( 6 ) .

3°) - Dispositif selon la revendication 1 ,

Caractérisé par le fait que ledit chariot porte sur ses longerons latéraux ( 1 ) des pièces métalliques faisant fonction de rail ( 5 ) capables de conduire le boggie d'un wagon ferroviaire dont ledit chariot supporte la charge totale correspondante , lesdites pièces métalliques ( 5 ) , qui font office de rails , présentant à égale distance des essieux routiers ( 3 ) dudit chariot des sabots d'arrêt ( 21 ) et ( 22 ) placés de part et d'autre de chacune des roues dudit boggie ( 20 ) munis de tout moyen de verrouillage sur le chassis du chariot , tel que les chevilles ( 23 ) .

4°) - Dispositif selon la revendication 1,

Caractérisé par le fait que ledit chariot porte sur ses longerons latéraux ( 1 ) des pièces métalliques faisant fonction de rails ( 5 ) capables de conduire le train de roulement ( 7 ) ou bien chacun des boggies ( 20 ) d'un wagon ferroviaire , ainsi que la charge totale correspondante , lesdites pièces métalliques ( 5 ) qui font office de rail , présentant simultanément dans leur partie médiane sensiblement à égale distance des essieux routiers ( 3 ) un évidement ( 6 ) en forme de berceau circulaire pouvant recevoir une roue ferroviaire ( 7 ) et de l'y retenir , ainsi que de part et d'autre dudit évidement et à égale distance desdits essieux routiers ( 3 ), tout moyen de calage , tel que les chevilles ( 23 ) des sabots d'arrêt 21 et 22 placés de part et d'autre de chacune des roues dudit boggie ( 20 ) .

5°) - Dispositif selon la revendication 1,

Caractérisé par le fait que ledit chariot porte sur ses longerons latéraux ( 1 ) des pièces métalliques faisant fonction de rail ( 5 ) capables de conduire le train de roulement ( 7 ) d'un wagon ferroviaire et de supporter sa charge totale correspondante , lesdites pièces métalliques faisant fonction de rail conduisant à une plateforme mobile ( 11 ) , située à égale distance des essieux routiers ( 3 ) qui comporte de part et d'autre de son axe vertical (10) situé dans le plan médian longitudinal du chariot , en alignement avec les portions de rail ( 5 ) et les prolongeant, les berceaux verticaux ( 6 ) destinés à recevoir et à immobiliser chacune des roues ( 7 ) du train de roulement ferroviaire de part et d'autre de l'axe ( 10 ) autour duquel ladite plateforme mobile (11) peut se déplacer en rotation dans le plan vertical par rapport au chassis du chariot qui la porte , rendant ainsi ledit chariot indépendant en direction du wagon qu'il supporte .

6°) - Dispositif selon la revendication 5,

Caractérisé par le fait que l'essieu antérieur ( 3 ) du chariot est lui-même mobile, en rotation dans le plan horizontal , par rapport au chassis ( 1 ) autour de l'axe vertical ( 12 ) situé dans le plan médian du chariot de manière à faciliter l'orientation dudit essieu dans la traction qui est exercée sur lui par le tracteur routier ( 26 ) au moyen du brancard triangulaire , articulé sur ledit essieu antérieur mobile ( 3 ) .

7°) - Dispositif selon l'une quelconque des revendications précédentes,

Caractérisé par le fait qu'après le chargement du wagon ferroviaire sur ledit chariot , une pièce métallique ( 14 ) est fixée à chacune des pièces métalliques qui supportent les roues ( 7 ) du wagon ou chacune des roues des boggies ( 20 ) de manière à verrouiller chacune desdites roues , telle qu'elle est placée sur son support , au moyen d'une partie repliée de ladite pièce métallique ( 14 ) dans la partie basse de la jante de chaque roue ( 7 ) .

8°) - Dispositif selon l'une quelconque des revendications 2 à 4 ,

Caractérisé par le fait que l'attelage à un tracteur semi-remorque est obtenu au moyen d'un timon formé de deux poutres (27 ) convergeant vers l'avant , vers une plateforme munie de la tourelle d'ancrage ( 25 ) , la partie postérieure dudit timon étant constituée par les deux poutres rendues parallèles et pouvant se glisser dans les fourreaux ( 30 ) situés de part et d'autre d'un chassis de wagon ferroviaire dans lesquels ledit timon est retenu par la clavette transversale ( 33 ) qui traverse le chassis du wagon en même temps que les poutres dudit timon .

9°) - Dispositif selon l'une quelconque des revendications précédentes,

Caractérisé par le fait que le chariot antérieur et le chariot postérieur , portant chacun des trains de roulement d'un wagon, sont reliés entre eux par un moyen de liaison réglable capable d'établir entre eux une transmission de l'effort de traction sans soumettre à une telle contrainte le chassis du wagon ( 43 ) porté par lesdits chariots , tel que, donné à titre d'exemple, une chaîne ( 15 ) fixée à l'arrière du chariot antérieur ( 16 ) et à l'extrémité libre de laquelle coulisse une chaîne orthogonale ( 17 ) traversant le dernier maillon libre de la chaîne primaire ( 15 ) et dont l'un des brins de ladite chaîne ( 17 ) est solidaire d'un longeron latéral du chariot postérieur ( 18 ) , et l'autre brin libre de ladite chaîne ( 17 ) étant accroché sur l'autre longeron latéral , de manière à assurer une première tension de la chaîne principale ( 15 ) , la tension définitive étant obtenue au moyen du tendeur ( 19 ) intercalé dans la chaîne secondaire ( 17 ) .

10°) - Dispositif selon l'une quelconque des revendications précédentes,

Caractérisé par le fait qu'il est complété par une rampe inclinée ( 34 ) pouvant être fixée en bout de toute voie normale ou posée en tous points de celle-ci , étant fixée aux traverses qui la supportent , ladite rampe formée d'un tronçon de voie ferroviaire conduisant au niveau arrière des portions de rail ( 5 ) situées sur le chariot , et pouvant être parfaitement ajustée à elles grâce à la présence des roues latérales ( 39 ) fixées au sommet de la rampe ( 34 ) et entre lesquelles vient se loger, sans jeu excessif, la partie postérieure des portions de voie ferrée ( 5 ) que portent les chariots.

11°) - Dispositif selon la revendication 8,

Caractérisé par le fait que les moyens utilisés pour le chargement d'un wagon sur les chariots routiers sont complétés par le moyen de relier provisoirement les deux chariots entre eux de façon contiguë à l'aide des plaques de liaison (40 ) qui assurent la continuité des tronçons de voie ferrée ( 5 ) portées par lesdits chariots , une béquille réglable ( 42 ) étant placée sous lesdites plaques ( 40 ) et prenant appui sur le sol , lesdites plaques ( 40 ) et les béquilles ( 42 ) étant enlevées dès que le train de roulement avant du wagon se trouve engagé dans le berceau ( 6 ) du chariot antérieur , ou bien sont en place pour être calées au moyen des sabots d'arrêt ( 21 et 22 ) .

Pour : SARL TRANSIT TRANSCITERNE

Le Mandataire :       *François ECAL*

1/6

0079277

a)

Fig.1

b)

*Fig.2*

a)

b)

C     D

Fig. 3

15   1

13   16   4   19   17   43   18

Fig. 5

a   b

E

34

39   37   35

38   39   34   37   35   38

F

Fig. 4

a)

Fig. 6

b)

Fig. 7

Fig. 8